# EUROPEAN PATENT APPLICATION

(11) **EP 3 128 662 A2**
(43) Date of publication of application: **08.02.2017**
(21) Application number: 16183044.3
(22) Date of filing: 05.08.2016
(51) Int. Cl.: H02K 29/03, H02K 29/08, H02K 1/27, H02P 6/22, H02K 11/33, G01R 33/00, H02P 6/08, H02K 1/14

(54) **MOTOR ASSEMBLY, INTEGRATED CIRCUIT AND APPLICATION DEVICE**

(30) Priority: 07.08.2015 WO PCT/CN2015/086422; 05.07.2016 CN 201610524458
(71) Applicant: Johnson Electric S.A., 3280 Murten (CH)
(72) Inventor: Sun, Chi Ping, Shatin, N.T. (HK); Yeung, Shing Hin, Shatin, N.T. (HK); Xin, Fei, Shatin, N.T. (HK); Wong, Ken, Shatin, N.T. (HK); Huang, Shu Juan, Shatin, N.T. (HK); Jiang, Yun Long, Shatin, N.T. (HK); Li, Yue, Shatin, N.T. (HK); Liu, Bao Ting, Shatin, N.T. (HK); Wang, En Hui, Shatin, N.T. (HK); Yang, Xiu Wen, Shatin, N.T. (HK); Liu, Li Sheng, Shatin, N.T. (HK); Cui, Yan Yun, Shatin, N.T. (HK)
(74) Representative: Hocking, Adrian Niall

(57) **Abstract**

A motor assembly, an integrated circuit and an application device including the motor assembly are provided. The motor assembly includes a motor (100) and a motor driving circuit (200), the motor driving circuit (200) includes a step down circuit (10), and the step down circuit (10) includes a first current branch and a second current branch which are turned on selectively. The step down circuit can be integrated in an application specific integrated circuit to reduce the complexity and cost of the circuit.

## Description

### TECHNICAL FIELD

The present disclosure relates to the field of motor driving technology, and in particular to a motor assembly, an integrated circuit and an application device including the motor assembly.

### BACKGROUND

A motor can convert or transfer electrical energy based on the law of electromagnetic induction. A motor driving circuit is required to provide a drive signal for the motor. The motor driving circuit can be integrated in an application specific integrated circuit as much as possible, to reduce the complexity and cost of the circuit. In some motor driving circuits, a voltage drop resistor is required. However, the voltage drop resistor cannot be integrated in the application specific integrated circuit.

### SUMMARY

A motor assembly including a motor and a motor driving circuit is provided. The motor driving circuit includes a step down circuit having a first current branch and a second current branch which are turned on selectively.

Preferably, the first current branch and the second current branch are unidirectional current branches to allow currents having opposite directions to pass through.

Preferably, the first current branch comprises a power transistor; and the power transistor operates in an amplifier mode when the first current branch is turned on.

Preferably, the voltage drop circuit has a first terminal and a second terminal,
the first current branch includes: a first switch transistor and a first resistor, a current input terminal of the first switch transistor is electrically connected to the first terminal, a current output terminal of the first switch transistor is electrically connected to the second terminal, a control terminal of the first switch transistor is electrically connected to a terminal of the first resistor, and the other terminal of the first resistor is electrically connected to the current input terminal of the first switch transistor; and
the second branch includes: a second switch transistor and a second resistor, a current input terminal of the second switch transistor is electrically connected to the second terminal, a current output terminal of the second switch transistor is electrically connected to the first terminal, a control terminal of the second switch transistor is electrically connected to a terminal of the second resistor, and the other terminal of the second resistor is electrically connected to the current input terminal of the second switch transistor.

Preferably, a voltage drop between the current input terminal and the current output terminal of the first switch transistor is equal to a voltage drop between the current input terminal and the current output terminal of the second switch transistor.

Preferably, the motor driving circuit further includes a bidirectional alternating current switch and a switch control circuit which are both coupled to the motor in series, and a control output terminal of the switch control circuit is electrically coupled to a control terminal of the bidirectional alternating current switch.

Preferably, the motor driving circuit further comprises a magnetic field detection circuit to detect a magnetic field of a rotor of the motor and output magnetic field detection information to the switch control circuit.

Preferably, the switch control circuit is set to switch, at least based on the magnetic field detection information, between a first state in which a drive current flows from the control output terminal of the switch control circuit to the control terminal of the bidirectional alternating current switch and a second state in which a drive current flows from the control terminal of the bidirectional alternating current switch to the control output terminal of the switch control circuit.

Preferably, the motor is coupled to the bidirectional alternating current switch in series via an external alternating current power supply, and the switch control circuit is configured to switch between the first state and the second state based on a change of a polarity of the alternating current power supply and based on the magnetic field detection information.

Preferably, the switch control circuit comprises a first switch and a second switch, the first switch and the control output terminal are coupled in a first current path, the second switch and the control output terminal are coupled in a second current path in which a direction of a current is opposite to that in the first current path, and the first switch and the second switch are selectively turned on based on the magnetic field detection information.

Preferably, the switch control circuit comprises a first current path in which a current flows from the control output terminal to the external, a second current path in which a current flows from the control output terminal to the internal, and a switch coupled in one of the first current path and the second current path, and the switch is controlled by the magnetic field detection information to selectively turn on the first current path and the second current path.

Preferably, a flowing drive current is allowed by the switch control circuit when the alternating current power supply is in a positive half-cycle and the magnetic field of the rotor detected by the magnetic field detection circuit has a first polarity or when the alternating current power supply is in a negative half-cycle and the magnetic field of the rotor detected by the magnetic field detection circuit has a second polarity opposite to the first polarity, and there is no flowing drive current allowed by the control output terminal when the alternating current power supply is in a positive half-cycle and the magnetic field of the rotor has the second polarity or when the alternating current power supply is in a negative half-cycle and the magnetic field of the rotor has the first polarity.

An integrated circuit is provided. The integrated circuit includes: a housing, a semiconductor substrate arranged inside the housing, an input port and an output port which extend out from the housing, and an electronic circuit arranged on the semiconductor substrate, wherein the electronic circuit comprises a step down circuit having a first current branch and a second current branch which are turned on selectively.

Preferably, a heat dissipation plate is fixed in the housing.

An application device including a motor assembly according to any of the above descriptions is provided.

In embodiments of the present disclosure, the voltage drop circuit can be integrated in an application specific integrated circuit to reduce the complexity and cost of the circuit.

### BRIEF DESCRIPTION OF THE DRAWINGS

In order to illustrate technical solutions in embodiments of the present disclosure or in the conventional technology more clearly, drawings used in the description of the embodiments or the conventional technology are introduced briefly hereinafter. Apparently, the drawings described hereinafter merely illustrate some embodiments of the present disclosure, and other drawings may be obtained by those skilled in the art based on these drawings without any creative efforts.
Figure 1 is a structural diagram of a motor assembly according to an embodiment of the present disclosure;
Figure 2 is a structural diagram of a motor assembly according to another embodiment of the present disclosure;
Figure 3 is a structural diagram of a motor assembly according to still another embodiment of the present disclosure;
Figure 4 is a structural diagram of a motor in a motor assembly according to an embodiment of the present disclosure;
Figure 5 is a structural diagram of a motor assembly according to yet another embodiment of the present disclosure;
Figure 6 is a structural diagram of a motor assembly according to yet another embodiment of the present disclosure;
Figure 7 is a structural diagram of a switch control circuit in a motor assembly according to an embodiment of the present disclosure;
Figure 8 is a structural diagram of a switch control circuit in a motor assembly according to another embodiment of the present disclosure;
Figure 9 is a structural diagram of a switch control circuit in a motor assembly according to still another embodiment of the present disclosure;
Figure 10 is a structural diagram of a switch control circuit in a motor assembly according to yet another embodiment of the present disclosure;
Figure 11 is a structural diagram of a motor assembly according to yet another embodiment of the present disclosure;
Figure 12 is a structural diagram of a rectifying circuit in a motor assembly according to an embodiment of the present disclosure;
Figure 13 is a structural diagram of a rectifying circuit in a motor assembly according to another embodiment of the present disclosure; and
Figure 14 is a diagram of a specific circuit of a motor assembly according to an embodiment of the present disclosure.

### DETAILED DESCRIPTION OF THE EMBODIMENTS

The technical solutions in embodiments of the present disclosure are clearly and completely described hereinafter in conjunction with the drawings in the embodiments of the present disclosure. Apparently, the described embodiments are only a few rather than all of the embodiments of the present disclosure. All other embodiments obtained by those skilled in the art based on the embodiments of the present disclosure without any creative efforts fall within the protection scope of the present disclosure.

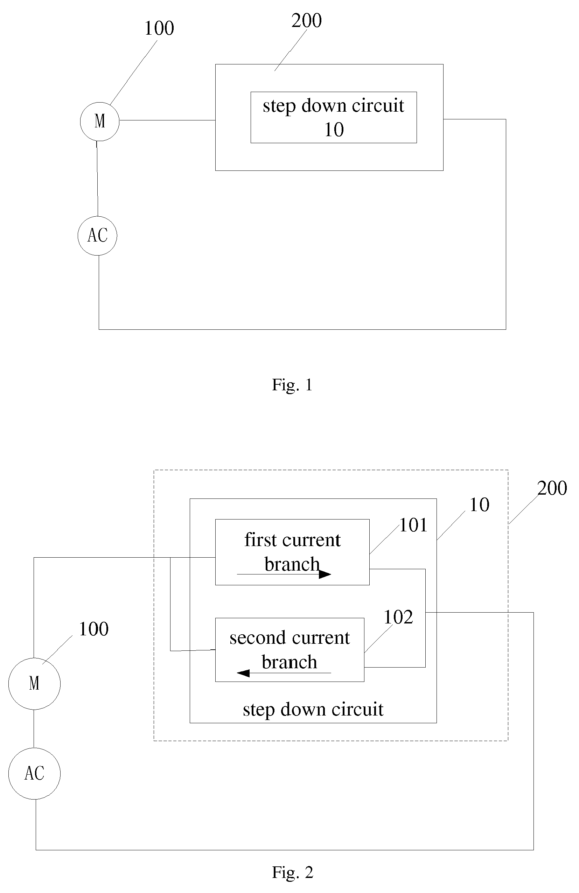

Reference is made to Figure 1 and Figure 2. Structural diagrams of a motor assembly according to an embodiment of the present disclosure are shown. The motor assembly can include a motor 100 and a motor driving circuit 200. Specifically, the motor driving circuit 200 includes a step down circuit 10, and the step down circuit 10 includes a first current branch 101 and a second current branch 102 which are turned on selectively.

Preferably, the first current branch 101 and the second current branch 102 according to the embodiment of the present disclosure are unidirectional current branches and are configured to allow currents having opposite directions to pass through. As shown by arrows in Figure 2, a current in the first current branch 101 flows from left to right, and a current in the second current branch 102 flows from right to left. Of course, the current in the first current branch 101 may flow from right to left, and in this case, the current in the second current branch 102 is required to flow from left to right, that is, the currents in the first current branch 101 and the second current branch 102 flow in opposite directions.

On the basis of the above embodiment, in an embodiment of the present disclosure, a voltage drop generated by the first current branch 101 is equal to that generated by the second current branch 102, and the present disclosure is not limited hereto and depends on specific situations.

Preferably, the first current branch 101 includes a power transistor. When the first current branch 101 is turned on, a current thereof flows through the power transistor in a first direction, and the power transistor may be enabled to operate in an amplifier mode so as to allow the first current branch to generate a required voltage drop. The second current branch may also include a power transistor. When the second current branch 102 is turned on, a current thereof flows through the power transistor in a second direction opposite to the first direction, and the power transistor may also be enabled to operate in an amplifier mode so as to allow the second current branch to generate a required voltage drop. Moreover, the flow direction of a current in the power transistor in the second current branch 102 is opposite to the flow direction of a current in the power transistor in the first current branch 101.

In the embodiments of the present disclosure, when the first current branch or the second current branch is turned on, the power transistor thereof is turned on and operates in the amplifier mode, a base current is very low, and an equivalent resistor between the collector and the emitter is very large, therefore, a very large voltage drop will be generated between the collector and the emitter so as to achieve the required voltage dropping.

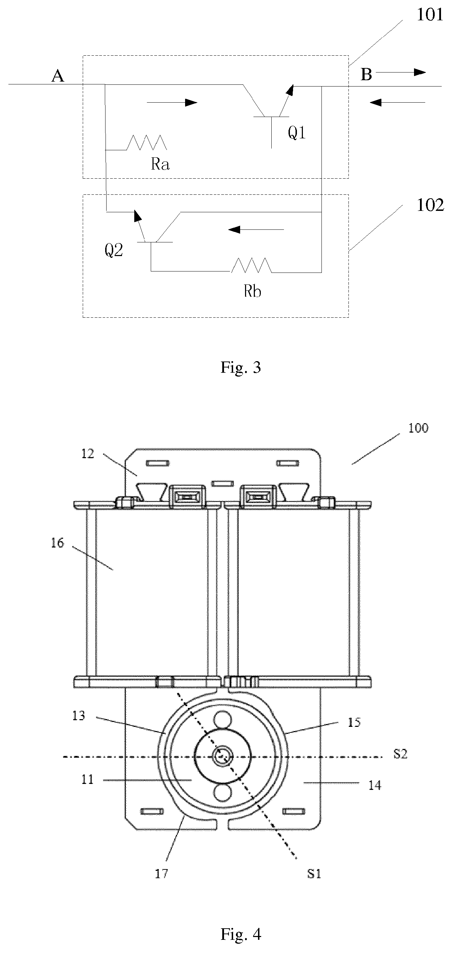

Figure 3 shows a specific implementation of a step down circuit 10 according to an embodiment of the present disclosure. The step down circuit 10 has a first terminal A and a second terminal B. The first current branch 101 can include a first switch transistor Q1 and a first resistor Ra. A current input terminal (i.e., a collector of the first switch transistor Q1) of the first switch transistor Q1 is electrically connected to the first terminal A, a current output terminal (i.e., an emitter of the first switch transistor Q1) of the first switch transistor Q1 is electrically connected to the second terminal B, a control terminal (i.e., a base of the first switch transistor Q1) of the first switch transistor Q1 is electrically connected to a terminal of the first resistor Ra, and the other terminal of the first resistor Ra is electrically connected to the current input terminal (i.e., the first terminal A of the step down circuit 10).

The second current branch 102 can include a second switch transistor Q2 and a second resistor Rb. A current input terminal (i.e., a collector of the second switch transistor Q2) of the second switch transistor Q2 is electrically connected to the second terminal B, a current output terminal (i.e., an emitter of the second switch transistor Q2) of the second switch transistor Q2 is electrically connected to the first terminal A, a control terminal (i.e., a base of the second switch transistor Q2) of the second switch transistor Q2 is electrically connected to a terminal of the second resistor Rb, and the other terminal of the second resistor Rb is electrically connected to the current input terminal (i.e., the second terminal B of the step down circuit 10) of the second switch transistor.

It should be noted that, in the embodiments of the present disclosure, it is preferred that a voltage drop between the current input terminal and the current output terminal of the first switch transistor is set to be equal to a voltage drop between the current input terminal and the current output terminal of the second switch transistor. Of course, the voltage drop of the first current branch may be set to be different from that of the second current branch based on actual requirements of the circuit, which is not limited in the present disclosure and depends on specific situations.

In any one of the above embodiments, optionally, the motor 100 is connected with the step down circuit 10 in series, as shown in Figure 1. In a specific application example of the present disclosure, the motor 100 can be a synchronous motor. It can be understood that, the step down circuit in the motor driving circuit 200 according to the present disclosure is applicable to a synchronous motor as well as other types of alternating current permanent magnet motors. The synchronous motor can include a stator and a rotor rotatable relative to the stator. The stator includes a stator core and a stator winding wound on the stator core. The stator core may be made of soft magnetic materials such as pure iron, cast iron, cast steel, electrical steel, silicon steel. The rotor includes a permanent magnet, and the rotor operates at a constant rotational speed of 60f/p revs/min during a steady state when the stator winding is connected in series with an alternating current power supply, where the f is a frequency of the alternating current power supply and the p is the number of pole pairs of the rotor.

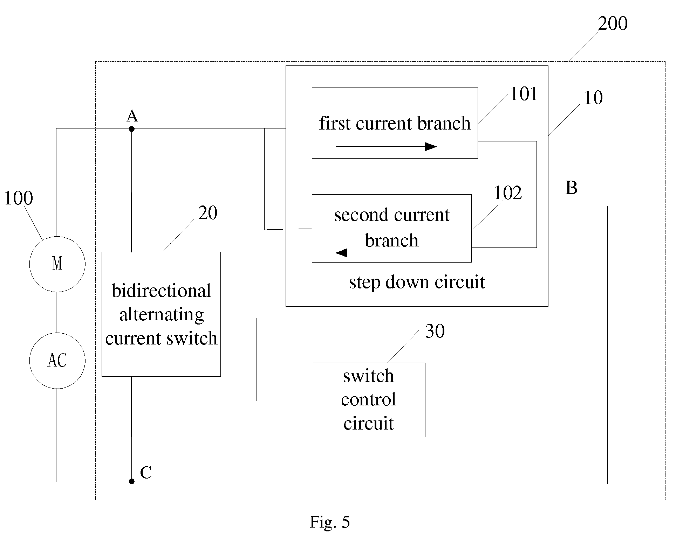

On the basis of the above embodiments, in an embodiment of the present disclosure, as shown in Figure 5, the motor driving circuit 200 further includes a bidirectional alternating current switch 20 and a switch control circuit 30 which are connected in series with the motor 100. A control output terminal of the switch control circuit 30 is electrically connected to a control terminal of the bidirectional alternating current switch 20, so as to turn on or turn off the bidirectional alternating current switch 20 in a pre-determined manner. In an embodiment, the switch control circuit 30 may be implemented by a microcontroller.

The bidirectional alternating current switch 20 can be a triac (TRIAC), two anodes of the triac are connected to a node A and a node C respectively, and a control terminal of the triac is connected to the switch control circuit. It can be understood that the controllable bidirectional alternating current switch can be an electronic switch, which allows currents to flow in two directions, consisting of one or more of a metal-oxide semiconductor field effect transistor, a silicon-controlled rectifier, bidirectional triode thyristor, insulated gate bipolar transistor, bipolar junction transistor, thyristor and optocoupler. For example, two metal-oxide semiconductor field effect transistors, two silicon-controlled rectifiers, two insulated gate bipolar transistors, and two bipolar junction transistors.

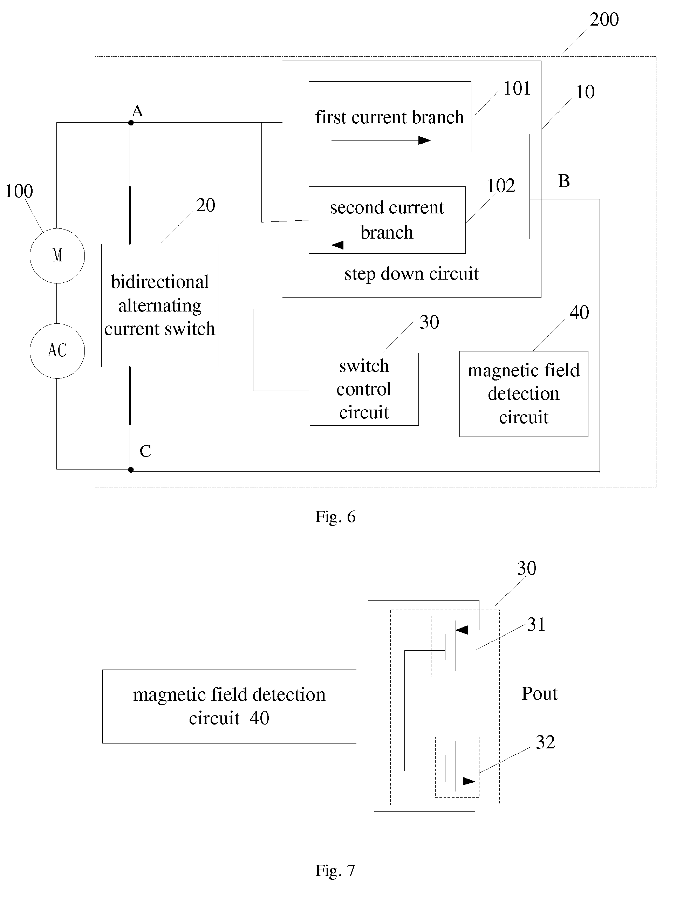

On the basis of the above embodiments, in an embodiment of the present disclosure, as shown in Figure 6, the motor driving circuit 200 further includes a magnetic field detection circuit 40 to detect a magnetic field of a rotor of the motor 100 and output corresponding magnetic field detection information to the switch control circuit 30.

Specifically, in an embodiment of the present disclosure, the magnetic field detection circuit 40 includes a magnetic field detection element to detect the magnetic field of the rotor and output an electric signal, a signal processing unit to amplify and descramble the electric signal, and an analog-digital converting unit to convert the amplified and descrambled electric signal into the magnetic field detection information. For an application to only identify a polarity of the magnetic field of the rotor, the magnetic field detection information may be a switch-type digital signal. The magnetic field detection element may be preferably a Hall plate.

In the above embodiments, the switch control circuit 30 can operate, at least based on the magnetic field detection information, in at least one of a first state, in which a drive current flows from the control output terminal of the switch control circuit 30 to the control terminal of the bidirectional alternating current switch 20, and a second state, in which a drive current flows from the control terminal of the bidirectional alternating current switch 20 to the control output terminal of the switch control circuit 30. In a preferred embodiment, the switch control circuit 30 can switch between the first state and the second state. It should be noted that, in the embodiments of the present disclosure, the switch control circuit 30 is not limited to switch to the other state immediately after one state is over, and may be switch to the other state in a certain time interval after one state ends. In a preferred application example, there is no output in the control output terminal of the switch control circuit 30 in the time interval between switching of the two states.

On the basis of the above embodiments, in an embodiment of the present disclosure, the switch control circuit 30 can include a first switch transistor and a second switch transistor. The first switch transistor and the control output terminal are connected in the first current path, the second switch transistor and the control output terminal are connected in the second current path having a direction opposite to that of the first current path, and the first switch transistor and the second switch transistor are turned on selectively based on the magnetic field detection information. Preferably, the first switch transistor may be a triode, and the second switch transistor may be a triode or a diode, which are not limited in the present disclosure and depend on situations.

Specifically, in an embodiment of the present disclosure, as shown in Figure 7, the first switch 31 and the second switch 32 are a pair of complementary semiconductor switches. The first switch 31 is turned on at a low level, and the second switch 32 is turned on at a high level. The first switch 31 and the control output terminal Pout are connected in a first current path; and the second switch 32 and the control output terminal Pout are connected in a second current path. A control terminal of the first switch 31 and a control terminal of the second switch 32 are both connected to the magnetic field detection circuit 40. A current input terminal of the first switch 31 is electrically connected to a high voltage (such as a direct current power supply), a current output terminal of the first switch 31 is electrically connected to a current input terminal of the second switch 32, and a current output terminal of the second switch 32 is electrically connected to a low voltage (such as the ground). When the magnetic field detection information outputted by the magnetic field detection circuit 40 is at a low level, the first switch 31 is turned on, the second switch 32 is turned off, and a drive current flows from the high voltage to the external through the first switch 31 and the control output terminal Pout. And when the magnetic field detection information outputted by the magnetic field detection circuit 40 is at a high level, the second switch 32 is turned on, the first switch 31 is turned off, and a drive current flows from the control terminal of the bidirectional alternating current switch 20 to the control output terminal Pout and flows through the second switch 32 to the low voltage. Preferably, in an embodiment of the present disclosure, the first switch 31 in the example shown in Figure 7 is a p-type metal-oxide semiconductor field effect transistor (P-type MOSFET), and the second switch 32 is an n-type metal-oxide semiconductor field effect transistor (N-type MOSFET). It can be understood that, in other embodiments, the first switch and the second switch may be other types of semiconductor switches, such as junction field effect transistors (JFET) or metal semiconductor field effect transistors (MESFET), which are not limited in the present disclosure.

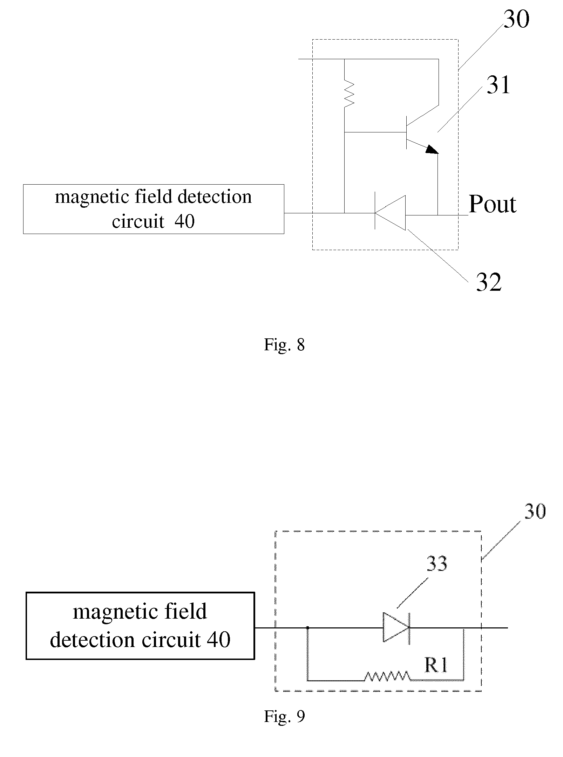

In another embodiment of the present disclosure, as shown in Figure 8, the first switch 31 is a switch turned on at a high level, the second switch 32 is a diode. A control terminal of the first switch 31 and a cathode of the second switch 32 are electrically connected to the magnetic field detection circuit 40. A current input terminal of the first switch 31 is connected to an external alternating current power supply, and a current output terminal of the first switch 31 and an anode of the second switch 32 are both electrically connected to the control output terminal Pout. The first switch 31 and the control output terminal Pout are connected in a first current path, and the control output terminal Pout, the second switch 32 and the magnetic field detection circuit 40 are connected in a second current path. When the magnetic field detection information outputted by the magnetic field detection circuit 40 is at a high level, the first switch 31 is turned on, the second switch 32 is turned off, and a drive current flows from external alternating current power supply, passes through the first switch 31 and the control output terminal Pout and flows to the external. And when the magnetic field detection information outputted by the magnetic field detection circuit 40 is at a low level, the second switch 32 is turned on, the first switch 31 is turned off, and a drive current flows from the control terminal of the bidirectional alternating current switch 20 to the control output terminal Pout and flows through the second switch 32. It can be understood that, in other embodiments of the present disclosure, the first switch 31 and the second switch 32 may be of other structures, which are not limited in the present disclosure and depend on specific situations.

In another embodiment of the present disclosure, the switch control circuit 30 can include a first current path in which a current flows from the control output terminal Pout to the external, a second current path in which a current flows from the control output terminal Pout to the internal, and a switch connected in one of the first current path and the second current path. There is no switch in the other one of the first current path and the second current path, and the switch control circuit 30 is controlled by the magnetic field detection information outputted by the magnetic field detection circuit 40, so as to turn on the first current path and the second current path selectively.

In a specific implementation, as shown in Figure 9, the switch control circuit 30 includes an unidirectional switch 33, the unidirectional switch 33 and the control output terminal Pout are connected in a first current path, a current input terminal of the unidirectional switch 33 may be electrically connected to an output terminal of the magnetic field detection circuit 40, and the output terminal of the magnetic field detection circuit 40 may be further connected, through a resistor R1, to the control output terminal Pout in a second current path having a direction opposite to that of the first current path. The unidirectional switch 33 is turned on when a magnetic field induction signal is at a high level, and a drive current flows to the external through the unidirectional switch 33 and the control output terminal Pout. The unidirectional switch 33 is turned off when the magnetic field induction signal is at a low level, a drive current flows from the external to the control output terminal Pout and flows through the resistor R1 and the magnetic field detection circuit 40. As an alternative, the resistor R1 in the second current path may be replaced with another unidirectional switch connected in anti-parallel with the unidirectional switch 33. In this way, a drive current flowing from the control output terminal is relatively balanced with a drive current flowing to the control output terminal, which is not limited in the present disclosure.

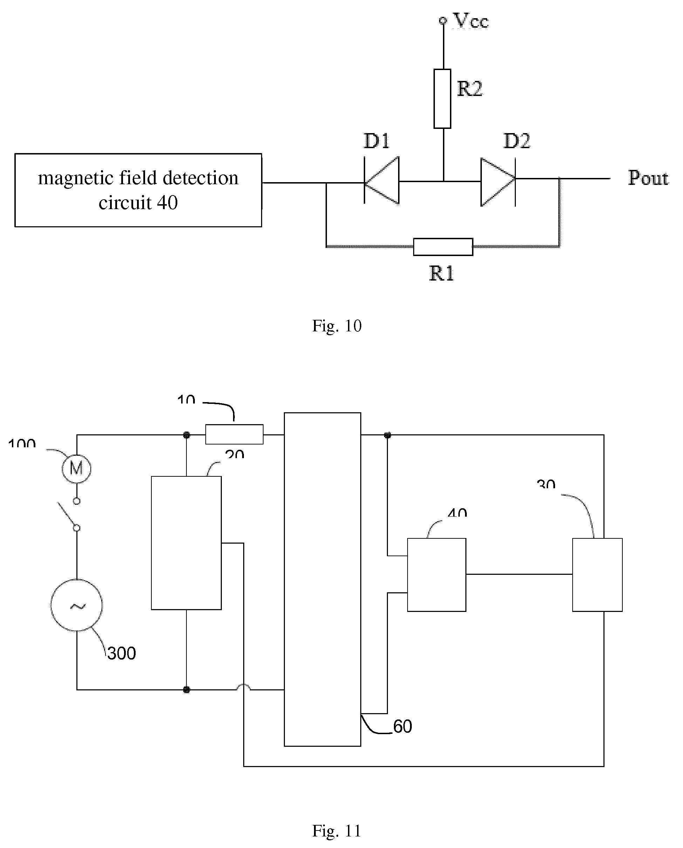

In another specific implementation, as shown in Figure 10, the switch control circuit 30 includes diodes D1 and D2 connected in anti-series between the output terminal of the magnetic field detection circuit 40 and the control output terminal Pout, a resistor R1 connected in parallel with the series-connected diodes D1 and D2, and a resistor R2 connected between, a common terminal of the diodes D1 and D2, and an external power supply Vcc. A cathode of the diode D1 is connected to the output terminal of the magnetic field detection circuit 40. The diode D1 is controlled by the magnetic field detection circuit 40. When the magnetic field detection circuit 40 outputs a high level, the diode D1 is turned off, and a drive current flows from the power supply Vcc, passes through the resistor R2 and the diode D2, and flows from the control output terminal Pout to the external. When the magnetic field detection circuit 40 outputs a low level, a drive current flows from the external to the control output terminal Pout, and flows through the resistor R1 and the magnetic field detection circuit 40.

In an embodiment of the present disclosure, as shown in Figure 6, the motor 100 is connected in series with the bidirectional alternating current switch 20 across an external alternating current power supply 300. The switch control circuit 30 can switch between the first state and the second state based on a change of polarity of the alternating current power supply 300 and the magnetic field detection information.

In an embodiment of the present disclosure, the switch control circuit 30 can allow the control output terminal to have a drive current to flow when the alternating current power supply 300 is in a positive half-cycle and a polarity of the magnetic field of the rotor detected by the magnetic field detection circuit 40 is a first polarity, or when the alternating current power supply 300 is in a negative half-cycle and the polarity of the magnetic field of the rotor detected by the magnetic field detection circuit 40 is a second polarity opposite to the first polarity. There is no drive current to flow through the control output terminal when the alternating current power supply 300 is in a positive half-cycle and the polarity of the magnetic field of the rotor is the second polarity, or when the alternating current power supply 300 is in a negative half-cycle and the polarity of the magnetic field of the rotor is the first polarity. It should be noted that, when the alternating current power supply 300 is in a positive half-cycle and the magnetic field of the rotor has the first polarity or when the alternating current power supply 300 is in a negative half-cycle and the magnetic field of the rotor has the second polarity, the situation that the control output terminal has a flowing drive current may be a situation that the control output terminal has a flowing drive current for whole duration of the two cases described above, or may be a situation that the control output terminal has a flowing drive current for partial duration of the two cases described above.

In an embodiment of the present disclosure, as shown in Figure 11, the motor driving circuit further includes a rectifying circuit 60 connected in series with the step down circuit 10. The rectifying circuit 60 can convert an alternating current signal outputted by the alternating current power supply 300 into a direct current signal.

It should be noted that, in the embodiments of the present disclosure, an input terminal of the rectifying circuit 60 may include a first input terminal and a second input terminal which are connected to the alternating current power supply 300. In the present disclosure, the case that the input terminals are connected to the alternating current power supply 300 may be a case that the input terminals are directly connected to two terminals of the alternating current power supply 300, or may be a case that the input terminals are connected in series with the motor across two terminals of the alternating current power supply 300, which is not limited in the present disclosure and depends on specific situations, as long as the rectifying circuit 60 can convert the alternating current signal outputted by the alternating current power supply 300 into the direct current signal.

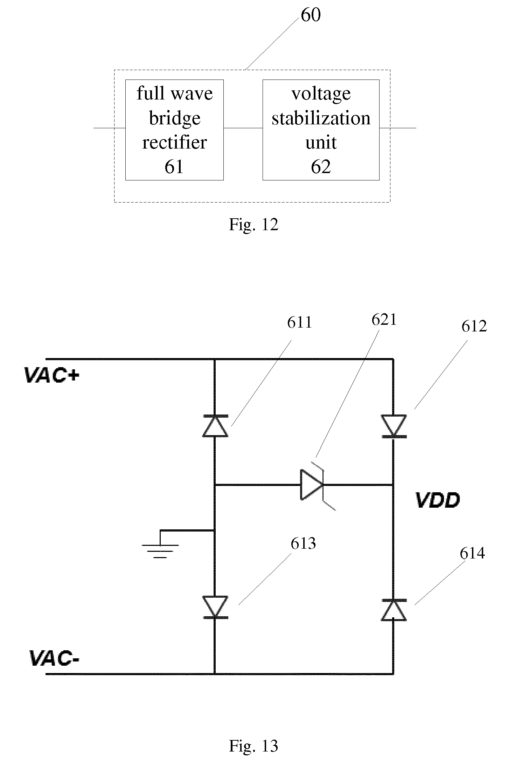

In an specific embodiment of the present disclosure, as shown in Figure 12, the rectifying circuit 60 can include a full wave bridge rectifier 61 and a voltage stabilization unit 62 connected to the output of the full wave bridge rectifier 61. The full wave bridge rectifier 61 can to convert the alternating current outputted by the alternating current power supply 300 into the direct current, and the voltage stabilization unit 62 can stabilize the direct current signal outputted by the full wave bridge rectifier 61 within a pre-set range.

Figure 13 shows a specific circuit of the rectifying circuit 60. The voltage stabilization unit 62 includes a Zener diode 621 connected between two output terminals of the full wave bridge rectifier 61. The full wave bridge rectifier 61 includes a first diode 611 and a second diode 612 connected in series, and a third diode 613 and a fourth diode 614 connected in series. A common terminal of the first diode 611 and the second diode 612 is electrically connected to the first input terminal VAC+, and a common terminal of the third diode 613 and the fourth diode 614 is electrically connected to the second input terminal VAC-.

An input terminal of the first diode 611 is electrically connected to an input terminal of the third diode 613 to form a grounded output terminal of the full wave bridge rectifier, and an output terminal of the second diode 612 is electrically connected to an output terminal of the fourth diode 614 to form a voltage output terminal VDD of the full wave bridge rectifier. The Zener diode 621 is connected between a common terminal of the second diode 612 and the fourth diode 614, and a common terminal of the first diode 611 and the third diode 613. It should be noted that, in the embodiments of the present disclosure, a power terminal of the switch control circuit 30 may be electrically connected to the voltage output terminal of the full wave bridge rectifier 61.

Accordingly, an application device including a motor assembly according to any one of the above embodiments is further provided. Preferably, the application device is a pump, a fan, a household appliance or a vehicle, which is not limited in the present disclosure and depends on specific situations.

On the basis of the above embodiments, in an embodiment of the present disclosure, a motor in the motor assembly is a single-phase permanent magnet brushless motor, which is not limited in the present disclosure and depends on specific situations. To sum up, a function of a conventional motor driving circuit is extended by the motor assembly according to the embodiments of the present disclosure, hence, the cost of the overall circuit is reduced and the reliability of the circuit is improved.

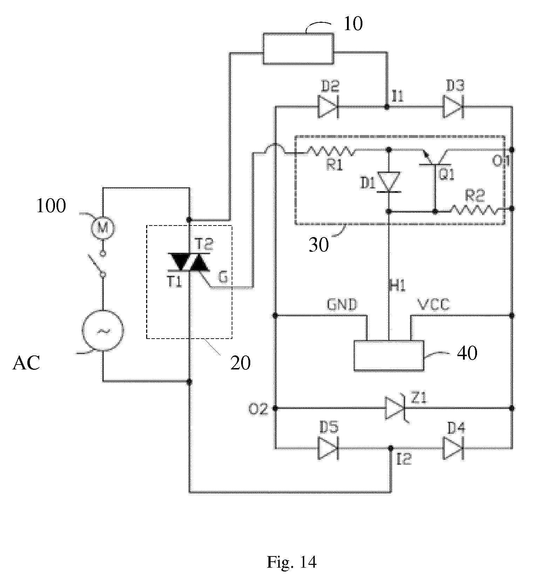

In addition, an integrated circuit is further provided according to an embodiment of the present disclosure. The integrated circuit includes a housing, a semiconductor substrate arranged inside the housing, an input port and an output port which extend out from the housing, and an electronic circuit arranged on the semiconductor substrate. As shown in Figure 14, the electronic circuit includes a step down circuit 10, and the step down circuit includes a first current branch and a second current branch which are turned on selectively. It should be noted that, on the basis of the above embodiments, in an embodiment of the present disclosure, the step down circuit has features of a step down circuit in a motor assembly according to any one of the above embodiments.

The step down circuit according to the embodiments of the present disclosure may be integrated in the integrated circuit. A heat dissipation plate may be fixed in the housing of the integrated circuit, so that the step down circuit may dissipate heat via the heat dissipation plate and avoid damage due to a very high temperature of the internal circuit.

In an embodiment of the present disclosure, as shown in Figure 14, the electronic circuit further includes some or all of a magnetic field detection circuit 40, a switch control circuit 30, a bidirectional alternating current switch 20 and a rectifying circuit (which includes the diodes D2, D3, D4 and D5). For structures and functions of the magnetic field detection circuit, the switch control circuit, the bidirectional alternating current switch and the rectifying circuit, reference can be made to structures and functions of a magnetic field detection circuit, a switch control circuit, a bidirectional alternating current switch and a rectifying circuit in a motor assembly according to any one of the above embodiments, which are not repeated in the present disclosure.

On the basis of any one of the above embodiments, in an embodiment of the present disclosure, a heat dissipation plate is fixed on the housing, so as to dissipate heat generated by the electronic circuit to the external environment, and avoid damage to the electronic circuit due to a very high temperature thereof.

In another embodiment, the motor may be connected in series with the bidirectional switch between a node A and a node C, and the node A and the node C may be connected to two terminals of the alternating current power supply respectively.

A motor assembly, an integrated circuit and an application device including the motor assembly are provided in the present disclosure. The motor assembly includes a motor and a motor driving circuit, the motor driving circuit includes a step down circuit, and the step down circuit includes a first current branch and a second current branch which are turned on selectively. In the motor assembly according to the embodiments of the present disclosure, the step down circuit is integrated in an application specific integrated circuit, thereby reducing the complexity and cost of the circuit.

To facilitate description, the above systems are divided into various modules based on functions and are described respectively. Of course, when implementing the present disclosure, the functions of the various modules may be implemented in one or more software and/or hardware.

It should be noted that, relational terms in the present disclosure such as the first or the second are only used to differentiate one entity or operation from another entity or operation, rather than requiring or indicating any actual relation or sequence among the entities or operations. In addition, terms such as "include", "comprise" or any other variant are intended to be non-exclusive, so that the process, method, item or device including a series of elements not only includes the elements but also includes other elements which are not specifically listed or the inherent elements of the process, method, item or device. With no more limitations, the element restricted by the phrase "include a..."does not exclude other same elements in the process, method, item or device including the element.

The above descriptions of the disclosed embodiments enable those skilled in the art to practice or use the present disclosure. Various changes to the embodiments are apparent to those skilled in the art, and general principles defined herein may be implemented in other embodiments without departing from the spirit or scope of the present disclosure. Therefore, the present disclosure is not limited to the embodiments disclosed herein, but conforms to the widest scope consistent with the principles and novel features disclosed herein.

## Claims

1. A motor assembly comprising a motor (100) and a motor driving circuit (200), wherein the motor driving circuit (200) comprises a step down circuit (10) having a first current branch (101) and a second current branch (102) which are turned on selectively.

2. The motor assembly according to claim 1, wherein the first current branch (101) and the second current branch (102) are unidirectional current branches to allow currents having opposite directions to pass through.

3. The motor assembly according to claim 2, wherein the first current branch (101) comprises a power transistor; and the power transistor operates in an amplifier mode when the first current branch (101) is turned on.

4. The motor assembly according to claim 1, wherein the step down circuit (10) has a first terminal (A) and a second terminal,
the first current branch (101) comprises: a first switch transistor (Q1) and a first resistor (Ra), a current input terminal of the first switch transistor (Q1) is electrically connected to the first terminal (A), a current output terminal of the first switch transistor (Q1) is electrically connected to the second terminal (B), a control terminal of the first switch transistor (101) is electrically connected to a terminal of the first resistor (Ra), and the other terminal of the first resistor (Ra) is electrically connected to the current input terminal of the first switch transistor (Q1); and
the second branch (102) comprises: a second switch transistor (Q2) and a second resistor (Rb), a current input terminal of the second switch transistor (Q2) is electrically connected to the second terminal, a current output terminal of the second switch transistor (102) is electrically connected to the first terminal, a control terminal of the second switch transistor (102) is electrically connected to a terminal of the second resistor (Rb), and the other terminal of the second resistor (Rb) is electrically connected to the current input terminal of the second switch transistor (102).

5. The motor assembly according to claim 4, wherein a voltage drop between the current input terminal and the current output terminal of the first switch transistor is equal to a voltage drop between the current input terminal and the current output terminal of the second switch transistor.

6. The motor assembly according to any one of claims 1-5, wherein the motor driving circuit (200) further comprises a bidirectional alternating current switch (20) and a switch control circuit (30) which are both coupled to the motor (100) in series, and a control output terminal of the switch control circuit (30) is electrically coupled to a control terminal of the bidirectional alternating current switch (20).

7. The motor assembly according to claim 6, wherein the motor driving circuit (200) further comprises a magnetic field detection circuit (40) to detect a magnetic field of a rotor of the motor (100) and output magnetic field detection information to the switch control circuit (30).

8. The motor assembly according to claim 7, wherein the switch control circuit (30) is set to switch, at least based on the magnetic field detection information, between a first state in which a drive current flows from the control output terminal of the switch control circuit (30) to the control terminal of the bidirectional alternating current switch (20) and a second state in which a drive current flows from the control terminal of the bidirectional alternating current switch (20) to the control output terminal of the switch control circuit.

9. The motor assembly according to claim 8, wherein the motor is coupled to the bidirectional alternating current switch (20) in series via an external alternating current power supply (300), and the switch control circuit (30) is configured to switch between the first state and the second state based on a change of a polarity of the alternating current power supply (300) and based on the magnetic field detection information.

10. The motor assembly according to claim 8, wherein the switch control circuit comprises a first switch (31) and a second switch (32), the first switch (31) and the control output terminal are coupled in a first current path, the second switch (32) and the control output terminal are coupled in a second current path in which a direction of a current is opposite to that in the first current path, and the first switch and the second switch are selectively turned on based on the magnetic field detection information.

11. The motor assembly according to claim 8, wherein the switch control circuit (30) comprises a first current path in which a current flows from the control output terminal to the external, a second current path in which a current flows from the control output terminal to the internal, and a switch coupled in one of the first current path and the second current path, and the switch is controlled by the magnetic field detection information to selectively turn on the first current path and the second current path.

12. The motor assembly according to claim 9, wherein a flowing drive current is allowed by the switch control circuit (30) when the alternating current power supply (300) is in a positive half-cycle and the magnetic field of the rotor detected by the magnetic field detection circuit has a first polarity or when the alternating current power supply (300) is in a negative half-cycle and the magnetic field of the rotor detected by the magnetic field detection circuit has a second polarity opposite to the first polarity, and there is no flowing drive current allowed by the control output terminal when the alternating current power supply (300) is in a positive half-cycle and the magnetic field of the rotor has the second polarity or when the alternating current power supply (300) is in a negative half-cycle and the magnetic field of the rotor (100) has the first polarity.

13. An integrated circuit comprising a housing, a semiconductor substrate arranged inside the housing, an input port and an output port which extend out from the housing, and an electronic circuit arranged on the semiconductor substrate, wherein the electronic circuit comprises a step down circuit (10) having a first current branch and a second current branch which are turned on selectively.

14. The integrated circuit according to claim 13, wherein a heat dissipation plate is fixed in the housing.

15. An application device comprising a motor assembly of any one of claims 1-12.
